# EUROPEAN PATENT SPECIFICATION

(11) **EP 1 318 051 B1**
(45) Date of publication and mention of the grant of the patent: **17.08.2011**
(21) Application number: 02025863.8
(22) Date of filing: 19.11.2002
(51) Int. Cl.: B60R 21/09, B60T 7/06

(54) **System to disengage the arm of a pedal**
Lösesystem für einen Bremspedalarm
Système de désengagement d'un bras de pédale

(30) Priority: 04.12.2001 IT TO20011128
(43) Date of publication of application: 11.06.2003
(73) Proprietor: Sistemi Comandi Meccanici S.C.M. S.p.A., 20011 Corbetta (MI) (IT)
(72) Inventor: La Rosa, Giacomo, 90144 Palermo (IT); Cavaglia', Renato, 10040 Volvera (Torino) (IT); Ballari, Marco, 10040 Gerbole di Volvera (Torino) (IT)
(74) Representative: Lotti, Giorgio

(56) References cited:
- EP-A- 1 065 114
- EP-A- 1 101 659
- US-A- 3 975 972
- US-A- 5 916 330
- PATENT ABSTRACTS OF JAPAN vol. 017, no. 414 (M-1456), 3 August 1993 (1993-08-03) -& JP 05 085220 A (NISSAN MOTOR CO LTD), 6 April 1993 (1993-04-06)

## Description

The present invention refers to a system to disengage the arm of a pedal of a motor vehicle in case the vehicle suffers such a frontal impact that the legs of the driver could be seriously injured.

Motor vehicles are generally provided with pedals intended to control acceleration, braking and to operate the clutch. Said pedals consist generally of an arm rotatably supported by a bracket located above the floor of the motor vehicle, a connection means between the accelerator, the brake or the clutch and the arm of the pedal, and a footboard connected to the free end of the arm of the pedal in order to allow the driver to push the arm.

European Patent Application EP 1.065.114, illustrates a system that allows to move the jointing point of the arm of a pedal, as a consequence of a frontal impact in order to prevent the legs of the driver from being injured.

However, the system illustrated in said application, needs a voluminous support structure to allow the fulcrum to move.

Moreover, US-A-5 916 330 discloses a system according to the preamble of claim 1.

It is an object of the present invention to provide a joint system adapted to disengage the arm of a control pedal of a motor vehicle that overcomes the aforementioned drawbacks.

Said object is achieved by means of a system to disengage the jointed arm of a pedal of a motor vehicle presenting the characteristics set forth in claim 1.

The present invention, as well as its advantages, will be better understood from the following detailed description referring to the appended drawings showing a preferred embodiment provided as non-restrictive example to better explain the invention, and in which:
- figure 1 is a perspective view of the pedal provided with the system according to the invention,
- figure 2 is a side view of the pedal in figure 1 without a detail around its fulcrum, and
- figure 3 is a side view of the pedal in the two operative positions of the system according to the invention, before and after the motor vehicle has suffered a frontal impact.

With reference to the figures, reference number 2 indicates a pedal for a motor vehicle provided with se disengagement system indicated by reference number 3. The pedal is pivoted by means of a bushing 4 on an axle 5 which is integral with a support (not shown) connected in a known way to the bodywork of the motor vehicle, at a point located under the dashboard and a little above the floor. The part of the pedal 2 which is connected to the axle 5 consists of the above mentioned disengagement system, indicated by reference number 3. The system consists of a bracket made of two grips 7 and 8, placed side by side and integral with an end of the bushing 4 by means of welding or any other known means. The grips 7 and 8 serve as a support to the arm 10 of the actual pedal, provided with the footboard 11 at one of its ends, while the other end is pivoted to the grips by means of an axle 12.

In the case here shown, the control push-rod 15 of the braking system of the motor vehicle is also pivoted on the axle 12 by means of the bracket 14.

In the free space between the two grips 7 and 8, a peak tooth 16 is rotatably connected to the same bushing 4. The peak is provided with a control appendix 17 connected by means of a traction spring 18 to a small arm 19 integral with one of the grips of the bracket 6. The shape of the tooth 16 is such that it can be perfectly coupled with an adequate seat 21 made on the arm 10 of the pedal near its joint point.

A bushing 23 internally threaded and integral with the free ends of the grips 7 and 8, that is the ends which are not connected to the bushing 4, houses a screw 24 that rabbets against the arm 10 of the pedal and allows to adjust its angular position in relationship with the bracket 6 and the tooth 16. Around the stem of the screw 24 there is a compressed spring 26 which pushes the arm 10 thus eliminating possible noises or clearances between the tooth 16 and/or the pivot 12 and the arm 10 which can arouse due to vibrations.

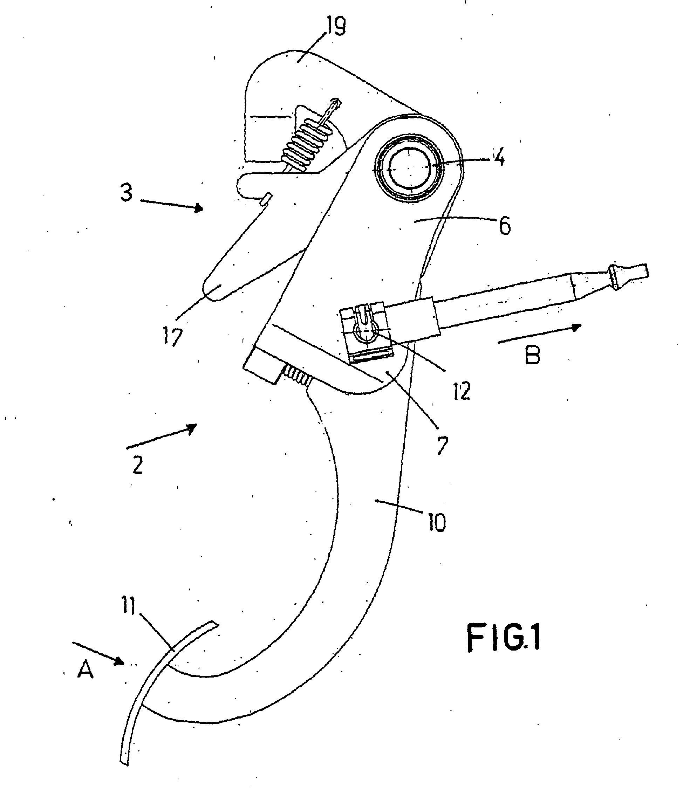

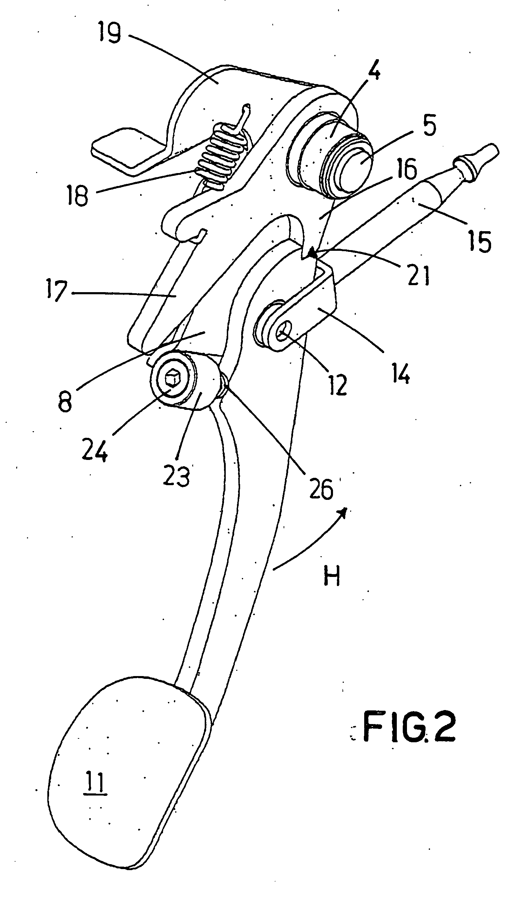

While in use, the pedal provided with the system according to the invention is as shown in figure 1, and the thrust made on the pedal 11 in the direction of the arrow A, makes the whole disengagement system rotate on the axle 4 so that the push rod 15 translates in the direction of arrow B, thus making the device to which it is connected work. The pedal and the disengagement system stay in the assembled and operating position since the rotation of the arm 10 of the pedal on the pivot 12, in the direction of the arrow H (figure 2), is prevented by the fact that the seat 21 on the arm 10 rabbets against the tooth 16, and is firmly kept there by the thrust of the screw 24 on the arm 10. The spring 18 helps keeping the tooth 16 in contact with the seat 21 on the arm 10.

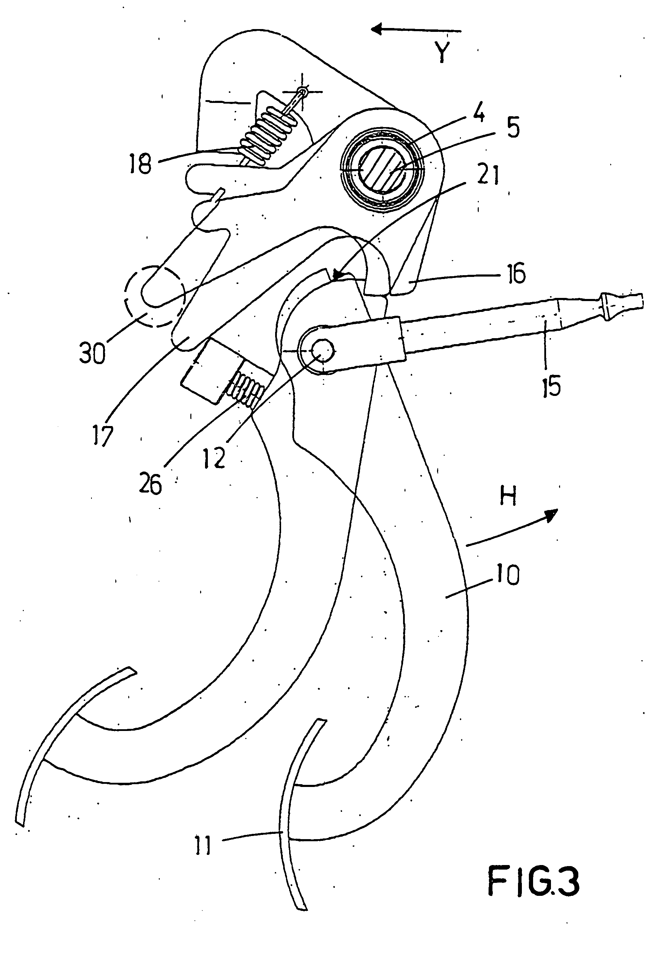

In case of violent frontal impact of the vehicle, the structures of the motor vehicle will undergo severe deformation, the consequence of said deformation being that the rotation axle 4 moves in the direction indicated by arrow Y in figure 3, that is toward the inside of the passenger compartment.

Said movement makes the peak 17 of the tooth 16 enter in contact with the fixed structure 30 of the motor vehicle, so that the tooth on the axle 4 rotates and becomes disengaged from the seat 21 on the arm 10 of the pedal. This one, because of the action of the spring 26 that extends itself, is free to rotate on the pivot 12 in the direction of arrow H, and so the thrush due to the frontal impact is prevented from affecting the legs of the driver.

## Claims

1. A system to disengage the arm of a pedal of a motor vehicle, provided with a footboard at one of its ends and adapted to operate, by means of a control means, on a control device of the motor vehicle; the other end of the arm (10) is jointed by means of a pivot (12) to a bracket (6) which in turn is jointed by means of a rotation axle (5) to a fixed part of the motor vehicle said bracket (6) being provided with means (16, 17) comprising a peak tooth (16), said means (16,17) being adapted to make said arm (10) integral with itself in a predefined relative angular position; the disengagement system is **characterised in that** the peak tooth (16) is provided with a control appendix (17) connected to the bracket (6) by means of a traction spring (18) and adapted to be in contact with a fixed part of the motor vehicle, as a consequence of the deformation of the structure of the motor vehicle caused by a frontal impact, in order to make the peak tooth (16) rotate on the bushing (4) and become disengaged from the seat (21) on the arm (10) of the pedal (2)

2. A disengagement system as claimed in claim 1, **characterised in that** the bracket (6) is formed by two grips (7, 8) integral with one of their ends to a bushing (4) rotatably inserted on the rotation axle (5).

3. A disengagement system as claimed in claim 2, **characterised in that** the means intended to make the arm (10) of the pedal (2) integral with the bracket (6) consist of a peak tooth (16) rotatably supported by the bushing (4) and adapted to help while rabbeting to an adequate seat (21) made on the arm (10) near the point where it is jointed to the pivot (12).

4. A disengagement system as claimed in claim 2, **characterised in that** the peak tooth (16) is placed between the two grips (7, 8)

5. A disengagement system as claimed in claim 2, **characterised in that** a bushing (23), internally threaded, is integral with the free ends of the grips (7, 8) and houses a screw (24) the end of which is adapted to rabbet against the arm (10) of the pedal (2) in order to push the seat (21) against the peak tooth (16).

6. A disengagement system as claimed in the claim 5, **characterised in that** a compression spring (26) is coaxial to the stem of the screw (24) between its head and the arm (10) of the pedal (2).

## Patentansprüche

1. System zum Ausrücken des Arms eines Pedals eines Kraftfahrzeugs, der an einem seiner Enden mit einer Fußplatte versehen ist und dazu ausgelegt ist, anhand eines Steuermittels eine Steuervorrichtung des Kraftfahrzeugs zu betätigen; wobei das andere Ende des Arms (10) über ein Drehgelenk (12) mit einem Halter (6) verbunden ist, der seinerseits über eine Drehwelle (5) mit einem festen Teil des Kraftfahrzeugs verbunden ist, wobei der Halter (6) mit Mitteln (16, 17) versehen ist, die einen spitzen Zahn (16) aufweisen, wobei die Mittel (16, 17) dazu ausgelegt sind, den Arm (10) in einer im Voraus definierten relativen Winkelstellung zu fixieren; wobei das Ausrücksystem **dadurch gekennzeichnet ist, dass** der spitze Zahn (16) mit einem Steueransatz (17) versehen ist, der mit dem Halter (6) über eine Zugfeder (18) verbunden ist und dazu ausgelegt ist, als Folge der Verformung des Aufbaus des Kraftfahrzeugs, die durch einen Frontalzusammenstoß verursacht wird, mit einem festen Teil des Kraftfahrzeugs in Kontakt zu sein, um den spitzen Zahn (16) zu einer Drehung an einer Buchse (4) zu veranlassen und von dem Sitz (21) am Arm (10) des Pedals ausgerückt zu werden.

2. Ausrücksystem nach Anspruch 1, **dadurch gekennzeichnet, dass** der Halter (6) durch zwei Griffe (7, 8) gebildet ist, die mit jeweils einem ihrer Enden mit einer Buchse (4) einteilig ausgebildet sind, die auf die Drehwelle (5) drehbar aufgesetzt ist.

3. Ausrücksystem nach Anspruch 2, **dadurch gekennzeichnet, dass** die Mittel, die den Arm (10) des Pedals (2) einteilig mit dem Halter (6) machen sollen, aus einem spitzen Zahn (16) bestehen, der durch die Buchse (4) drehbar unterstützt ist und dazu ausgelegt ist, das Drängen gegen einen geeigneten Sitz (21), der am Arm (10) in der Nähe des Punkts ausgebildet ist, an dem er mit dem Drehgelenk (12) verbunden ist, zu unterstützen.

4. Ausrücksystem nach Anspruch 2, **dadurch gekennzeichnet, dass** der spitze Zahn (16) zwischen den zwei Griffen (7, 8) angeordnet ist.

5. Ausrücksystem nach Anspruch 2, **dadurch gekennzeichnet, dass** eine Buchse (23) mit Innengewinde mit den freien Enden der Griffe (7, 8) einteilig ausgebildet ist und eine Schraube (24) aufnimmt, deren Ende dazu ausgelegt ist, gegen den Arm (10) des Pedals (2) gedrängt zu werden, um den Sitz (21) gegen den spitzen Zahn (16) zu schieben.

6. Ausrücksystem nach Anspruch 5, **dadurch gekennzeichnet, dass** eine Kompressionsfeder (26) zu dem Schaft der Schraube (24) zwischen ihrem Kopf und dem Arm (10) des Pedals (2) koaxial ist.

## Revendications

1. Système de désengagement d'un bras de pédale d'un véhicule à moteur, muni d'un repose-pied à l'une de ses extrémités et adapté pour agir, au moyen d'un moyen de commande, sur un dispositif de commande du véhicule à moteur, l'autre extrémité du bras (10) étant raccordée au moyen d'un pivot (12) à une patte (6) qui est à son tour raccordée au moyen d'un axe de rotation (5) à une partie fixe du véhicule à moteur, ladite patte (6) étant munie de moyens (16, 17) comprenant une dent à crochet (16), lesdits moyens (16, 17) étant adaptés pour rendre ledit bras (10) intégral avec lui-même dans une position angulaire relative prédéfinie; le système de désengagement étant **caractérisé en ce que** la dent à crochet (16) est munie d'un appendice de commande (17) connecté à la patte (6) au moyen d'un ressort de traction (18) et adapté pour être en contact avec une partie fixe du véhicule à moteur, comme conséquence de la déformation de la structure du véhicule à moteur provoquée par un choc frontal, afin de faire tourner la dent à crochet (16) sur la bague (4) et la faire se désengager de l'appui (21) sur le bras (10) de la pédale (2).

2. Système de désengagement selon la revendication 1, **caractérisé en ce que** la patte (6) est formée de deux mâchoires (7, 8), faisant partie intégrante par l'une de leurs extrémités d'une bague (4) insérée avec liberté de rotation sur l'axe de rotation (5).

3. Système de désengagement selon la revendication 2, **caractérisé en ce que** les moyens destinés à faire du bras (10) de la pédale (2) une partie intégrante de la patte (6) consistent en une dent à crochet (16) supportée avec liberté de rotation par la bague (4) et conçue pour servir tandis qu'elle forme un assemblage à feuillure avec un appui adéquat (21) prévu sur le bras (10) auprès du point où elle est raccordée au pivot (12).

4. Système de désengagement selon la revendication 2, **caractérisé en ce que** la dent à crochet (16) est placée entre les deux mâchoires (7, 8).

5. Système de désengagement selon la revendication 2, **caractérisé en ce qu'**une bague (23), filetée intérieurement, fait partie intégrante des extrémités libres des mâchoires (7, 8) et héberge une vis (24) dont l'extrémité est adaptée pour former un assemblage à feuillure contre le bras (10) de la pédale (2) afin de pousser l'appui contre la dent à crochet (16).

6. Système de désengagement selon la revendication 5, **caractérisé en ce qu'**un ressort à compression (26) est coaxial avec la tige de la vis (24) entre sa tête et le bras (10) de la pédale (2).
